(19) Europäisches Patentamt
European Patent Office
Office européen des brevets

(11) **EP 4 018 385 B1**

(12) **EUROPEAN PATENT SPECIFICATION**

(45) Date of publication and mention
of the grant of the patent:
**24.06.2026 Bulletin 2026/26**

(21) Application number: **20789334.8**

(22) Date of filing: **23.09.2020**

(51) International Patent Classification (IPC):
**G06N 3/045** *(2023.01)*     **G06N 3/084** *(2023.01)*
**G06N 3/09** *(2023.01)*     G06N 3/0464 *(2023.01)*
**G10L 15/16** *(2006.01)*

(52) Cooperative Patent Classification (CPC):
**G06N 3/084; G06N 3/045; G06N 3/09;**
G06N 3/0464; G10L 15/16

(86) International application number:
**PCT/US2020/052230**

(87) International publication number:
**WO 2021/061781 (01.04.2021 Gazette 2021/13)**

(54) **MULTI-TASK ADAPTER NEURAL NETWORKS**

NEURONALE NETZWERKE MIT MULTI-TASK-ADAPTER

RÉSEAUX NEURONAUX ADAPTEUR MULTITACHES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.09.2019 US 201962906035 P**

(43) Date of publication of application:
**29.06.2022 Bulletin 2022/26**

(73) Proprietor: **Google LLC
Mountain View, CA 94043 (US)**

(72) Inventors:
• **TAGLIASACCHI, Marco
8002 Zürich (CH)**
• **DE CHAUMONT QUITRY, Félix
8002 Zürich (CH)**
• **ROBLEK, Dominik
8002 Zürich (CH)**

(74) Representative: **Kennedy, Richard E. et al
Venner Shipley LLP
5 Stirling House
Stirling Road
The Surrey Research Park
Guildford GU2 7RF (GB)**

(56) References cited:
• **ZENG YUNI ET AL: "Spectrogram based multi-task audio classification", MULTIMEDIA TOOLS AND APPLICATIONS, KLUWER ACADEMIC PUBLISHERS, BOSTON, US, vol. 78, no. 3, 26 December 2017 (2017-12-26), pages 3705 - 3722, XP036698905, ISSN: 1380-7501, [retrieved on 20171226], DOI: 10.1007/S11042-017-5539-3**
• **MANINIS KEVIS-KOKITSI ET AL: "Attentive Single-Tasking of Multiple Tasks", 2019 IEEE/ CVF CONFERENCE ON COMPUTER VISION AND PATTERN RECOGNITION (CVPR), IEEE, 15 June 2019 (2019-06-15), pages 1851 - 1860, XP033687209, DOI: 10.1109/CVPR.2019.00195**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

This specification relates to machine learning models for performing multiple machine learning tasks, for example different digital audio processing tasks.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

Zeng, Y. et al., "Spectrogram based multi-task audio classification", Multimedia Tools and Applications 78, 3705-3722, 26 December 2017, discloses a Deep Neural Network-based multi-task model that deals with multiple audio classification tasks simultaneously. The model is termed gated Residual Networks (GResNets) since it integrates Deep Residual Networks (ResNets) with a gate mechanism. Two multiplied convolutional layers are used to replace two feed-forward convolution layers in the ResNets.

SUMMARY

The invention is set forth in the independent claims. The dependent claims set forth preferred embodiments.

The subject matter described in this specification can be implemented in particular embodiments so as to realize one or more of the following advantages.

The deployment of deep neural networks on mobile devices may require the efficient use of scarce computational resources, e.g. available memory or computing cost. When addressing multiple tasks simultaneously, it may be extremely important to share resources across tasks, especially when the tasks consume the same input data, e.g., audio samples captured by on-board microphones.

The multi-task adapter neural network described herein can solve multiple tasks simultaneously and more accurately by sharing representations via a shared encoder and task-specific adapter encoders at different depths. This allows common representations to be augmented, which in turn leads to better performance, e.g., higher accuracy, for the multi-task adapter neural network. In addition, by using a gating mechanism controlled by a small set of trainable variables that determine whether each channel of the task-adapter encoders is used as input to the next layer, the multi-task adapter neural network can effectively decide not to use some of the channels. This technique enables the multi-task adapter neural network to allocate an available computational budget to tasks and layers in a computational efficient way, for example by minimizing a computational cost measure such as a number of floating point operations (FLOPs) required to perform the tasks or a number of parameters of the neural network. The techniques described in this specification are particularly advantageous in situations that require an efficient use of scare computational resources, for example, when deploying deep neural networks on a mobile device.

The details of one or more embodiments of the subject matter of this specification are set forth in the accompanying drawings and the description below.

BRIEF DESCRIPTION OF THE DRAWINGS

FIG. 1 shows an example neural network system including a multi-task adapter neural network.
FIG. 2 is a flow diagram of an example process for generating a respective predicted output for each of the machine learning tasks given a shared input.
FIG. 3 is a flow diagram of an example process for training a multi-task adapter neural network.
FIG. 4 shows experimental results where the use of the described multi-task adapter neural network results in higher accuracy compared to using a baseline architecture given the same target computational cost.

Like reference numbers and designations in the various drawings indicate like elements.

DETAILED DESCRIPTION

This specification describes a system implemented as computer programs on one or more computers in one or more locations that includes a multi-task adapter neural network that is configured to perform multiple machine learning tasks simultaneously.

Generally, the multi-task adapter neural network is configured to receive a shared input for multiple machine learning tasks and to process the shared input to generate, for each of the multiple machine learning tasks, a respective predicted output.

The shared input is an audio recording and multiple machine learning tasks can be different audio processing tasks, e.g., speech recognition, language identification, hotword detection, content classification, and so on.

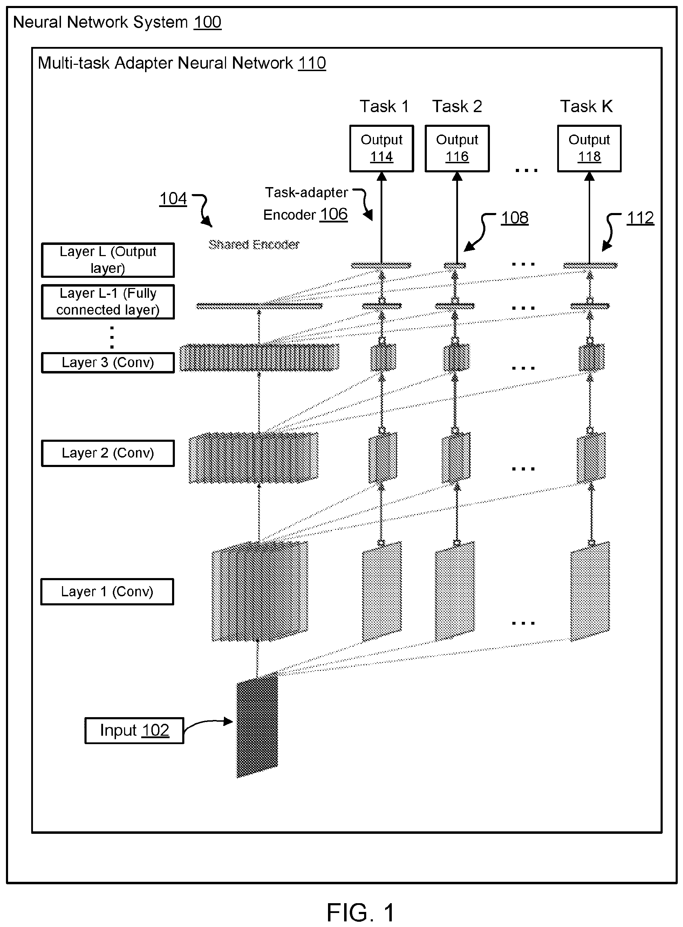

FIG. 1 shows an example neural network system 100. The neural network system 100 is an example of a system implemented as computer programs on one or more computers in one or more locations, in which the systems, components, and techniques described below can be implemented.

The neural network system 100 includes a multi-task adapter neural network 110. The multi-task adapter neural network 110 includes a shared encoder 104 and multiple task-adapter encoders (e.g., K task-adapter encoders including the task-adapter encoders 106, 108, ..., 112). As shown in FIG.1, the task-adapter encoders are arranged in parallel with the shared encoder. Some or all of the layers in a task adapter encoder can receive as input the concatenation of the activations of the previous layer computed by both the shared encoder and the task adapter itself. Thus, in some implementations, there is no inter-dependencies between tasks, such that during inference it is possible to compute simultaneously either all tasks or a subset of them, depending on the available resource budget for the system 100Generally, the shared encoder 104 is configured to receive a shared input 102 and to process the shared input 102 through each of multiple layers of the shared encoder 104 to extract shared feature representations (e.g., embeddings) of the shared input 102. The multiple machine learning tasks all operate on the same type of input, i.e., so that all of the multiple tasks can be performed on the same received shared input. The shared feature representations are shared among the multiple machine learning tasks and are used to compute a predicted output for each task.

As a particular example, when the multiple tasks are audio processing tasks, the shared input 102 can be a two-dimensional channel input. For example, the shared input 102 is an audio recording that has a two-dimensional channel for time and frequency.

Each of the task-adapter encoders is associated with a respective machine learning task of the multiple machine learning tasks. Each task-adapter encoder is configured to receive the shared input 102, to receive the shared feature representations from the shared encoder, and to process the shared input 102 and the shared feature representations to generate the respective predicted output for each of the one or more machine learning tasks.

Generally, the shared encoder 104 is a convolutional neural network that includes multiple convolutional neural network layers. Each of the task-adapter encoders is also a convolutional neural network that includes multiple convolutional neural network layers. The shared encoder 104 and each of the task-adapter encoders have the same number of convolutional neural network layers.

In some implementations, the shared encoder 104 includes multiple convolutional neural network layers and a fully connected neural network layer.

In some implementations, each of the plurality of task-adapter encoders includes multiple convolutional neural network layers followed by a max-pooling neural network layer and a fully connected neural network layer.

In particular, in some implementations, both the shared encoder 104 and each of the K task-adapter encoders include the same number of convolutional neural network layers (e.g., layer 1, layer 2, layer 3,..., as shown in FIG. 1), followed by a global max-pooling neural network layer (not shown) and a fully connected neural network layer (e.g., layer L-1), for a total of L layers.

In some implementations, each convolutional neural network layer in the shared encoder 104 and the task-adapter encoders is followed by a max-pooling neural network layer (e.g., to reduce time-frequency dimensions by a factor of two at each layer), a ReLU non-linearity layer and batch normalization layer. Finally, a global max-pooling layer is followed by a fully-connected layer.

In some implementations, each of the task-adapter encoders includes an output layer (e.g., layer L in FIG. 1) as the last layer (e.g., following the fully connected neural network layer). That is, each task-adapter encoder includes an appropriate kind of output layer for the corresponding machine learning task. For example, for classification tasks, the output layer is a softmax neural network layer. The output layer of each task-adapter encoder is configured to receive as input a concatenation of (i) the output produced by the last layer of the shared encoder 104 and (ii) the layer output produced by the previous layer of the task-adapter encoder, and to process the input to generate a predicted output for the respective machine learning task.

Each of the neural network layers in the shared encoder 104 receives as input an output of the previous neural network layer in the shared encoder 104 and outputs a three-dimensional tensor which is a stack of two-dimensional channel outputs.

Each of the neural network layers of each of the task-adapter encoders receives as layer input a concatenation of (i) a three-dimensional tensor outputted by the previous layer in the task-adapter encoder and (ii) a three-dimensional tensor outputted by the corresponding previous layer in the shared encoder 104 along the third dimension (i.e., the channel dimension). The layer input is a stack of two-dimensional channel inputs. Each of the neural network layers of each task-adapter encoder then processes the layer input to output a three-dimensional tensor which is a stack of two-dimensional channel outputs.

In particular, let $f_{k,i}(\cdot)$, $i = 1, \ldots L$ denote the function computed by each neural network layer of the shared encoder 104 and the task-adapter encoders at depth $i$, where $L$ is the total number of layers. To simplify the notation, let $k = 0$ denote the shared encoder 104 and $k = 1, \ldots, K$ denote the $K$ task specific encoders. The function $f_{k,i}(\cdot)$ produces as output a three-dimensional tensor of size $T_i \times F_i \times C_{k,i}$ which is a stack of two-dimensional channel outputs of size $T_i \times F_i$, where $T_i$ is the number of temporal frames, $F_i$ is the number of frequency bins, and $C_{k,i}$ is the number of output channels associated with layer $i$ of encoder $k$. The number of temporal frames $T_i$ and frequency bins $F_i$ is the same for all values of $k$. For the task-adapter encoders, a number of task-specific channels $C_{k,i} = \max(1, \lfloor \alpha_i C_{0,i} \rfloor)$ are included, where $C_{0,i}$ and $\alpha_i$ are hyper-parameters that determine a maximum achievable complexity of the neural network 110 (such that the cost for deploying the neural network 110 does not exceed the available computational budget). While it is possible to use a different value of $\alpha_i$ at each layer, throughout the rest of this specification, it is assumed that $\alpha_i = \alpha$ for $i = 1, \ldots, L$ for simplicity.

In the shared encoder 104, $f_{0,i}$ receives as input only the output of the previous layer in the shared encoder 104. However, in each task-adapter encoder, $f_{k,i}$, $k \neq 0$, receives as input a concatenation of the output of the previous layer of the shared encoder 104 (i.e., the output of $f_{0,i-1}$) and the output of the previous layer of the task-adapter encoder (i.e., the output of $f_{k,i-1}$) along the channel dimension. Therefore, the computational cost of computing the output of $f_{k,i}$, $k \neq 0$, can be expressed as:

$$cost_{k,i} = \eta_{i,k} \cdot C_{k,i} \cdot \left( C_{0,i-1} + C_{k,i-1} \right), \quad (1)$$

with $C_{0,0} = 1$ and $C_{k,0} = 1$ for $k \neq 0$, and $\eta_{i,k}$ is a cost scaling factor.

The cost scaling factor $\eta_{i,k}$ is a constant value that can be computed based on at least one of: i) the intrinsic architecture of the neural network layer, ii) the known sizes $T_i \times F_i$, or iii) a target computational cost measure. The target computational cost measure can be a number of floating point operations (FLOPs) or a number of parameters of the neural network 110.

Equation 1 implies that the computational cost of computing the output of each neural network layer of each task-adapter encoder is proportional to the number of output channels $C_{k,i}$ multiplied by the number of input channels ($C_{0,i-1} + C_{k,i-1}$). In other words, the computational cost of each neural network layer in each task-adapter encoder is proportional to the number of two-dimensional (2D) channel outputs in the stack of 2D channel outputs of the neural network layer multiplied by the number of 2D channel inputs in the stack of 2D inputs of the neural network layer.

The techniques described in this specification aim at learning how to scale the number of channels to be used in each neural network layer of the each task-adapter encoder, i.e., to determine $C_{k,i} \leq C_{k,i}$, subject to a constraint on the total computational cost. To do this, each task-adapter encoder uses a gating mechanism that controls the flow of activations in the task-adapter encoder. In particular, for each neural network layer, each task-adapter encoder uses $C_{k,i}$ additional trainable variables (also referred to as "channel selection variables") $a_{k,i} = [a_{k,i,1}, \ldots, a_{k,i,C_{k,i}}]$ to modulate the 2D channel output of each channel. In other words, each 2D channel output in the stack of 2D channel outputs generated by each neural network layer in each task-adapter encoder is associated with a respective channel selection variable.

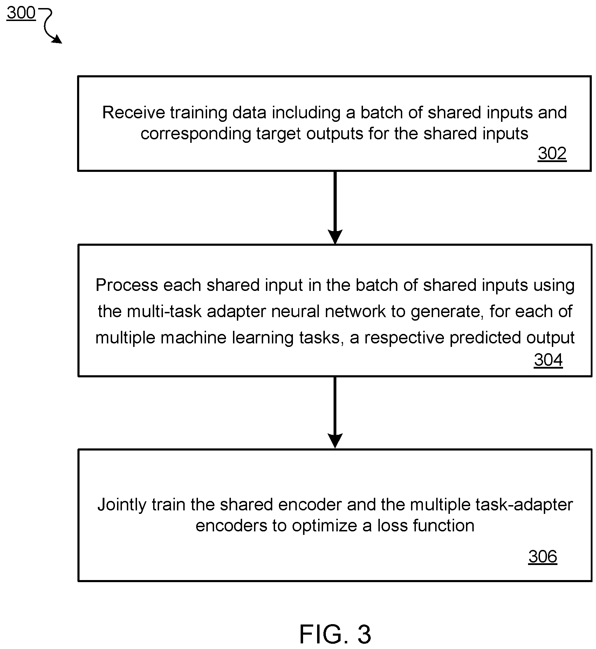

Each task-adapter encoder is configured to apply the gating mechanism on the stack of 2D channel outputs of each neural network layer using the corresponding channel selection variables of the neural network layer to select 2D channel outputs that should contribute to the layer output (e.g., a 3D tensor) of the layer and 2D channel outputs that can be discarded. The selected 2D channel outputs become 2D channel inputs for the next neural network layer of the task-adapter encoder. These channel selection variables are learned during the joint training of the shared encoder 104 and the multiple task-adapter encoders as described in detail below with respect to FIG. 3.

In particular, the gating mechanism applied to each 2D channel output in the stack of 2D channel outputs performs a nonlinear transformation on the 2D channel output using the respective channel selection variable as follows:

$$\tilde{f}_{k,i,c}(x) = \sigma\left( a_{k,i,c} \right) \cdot f_{k,i,c}(x), \quad (2)$$

where $\sigma(\cdot)$ is a non-linear transformation that maps its input to non-negative real numbers, i.e., $\mathbb{R} \to \mathbb{R}^+$.

For example, the non-linear transformation includes a clipped ReLU operation defined as follows:

$$\sigma(a; s) = \min\Big(1, ReLU(s \cdot a + 0.5)\Big)$$
$$, \ (3)$$

The slope of the non-linearity s is progressively increased during training, in such a way that, as $s \to \infty$, Equation (3) acts as a gating function.

It is noted that when the gating non-linearity is driven to output either 0 or 1 by progressively increasing the value of s during training, it is locked at this value, as the gradients are equal to zero. Therefore, it performs a hard selection of those channels that are contributing to the layer output and those that can be discarded. That is, when the output of the clipped ReLU operation is 1, the respective 2D channel output is selected to be a 2D channel input to the next neural network layer of the task-adapter encoder. When the output of the clipped ReLU operation is 0, the respective 2D channel output is not selected to be a 2D channel input to the next neural network layer of the task-adapter encoder.

The number of active channels/channel outputs in the i-th layer of the k-th task-adapter neural network is equal to:

$$c_{k,i} = \sum_{c=1}^{C_{k,i}} \mathbb{1}_{\sigma(a_{k,i,c})>0}$$
$$, \qquad (4)$$

where

$$\mathbb{1}_{\sigma(a_{k,i,c})}$$

is an indicator function that equals to 1 when $\sigma(a_{k,i,c})$ is greater than zero and equals to 0 otherwise.

During training of the multi-task adapter neural network 110, the shared encoder 104 and the task-adapter encoders are jointly trained to optimize a loss function that represents performance of the multi-task adapter neural network 110 on the multiple machine learning tasks and a computational cost to perform the multiple machine learning tasks.

More specifically, the loss function is a weighted sum of cross-entropy losses for the multiple machine learning tasks and the computational cost of computing the predicted outputs by the task-adapter encoders for a given set of channel selection variables.

The process of training the multi-task adapter neural network 110 is described in more detail below with reference to FIG. 3.

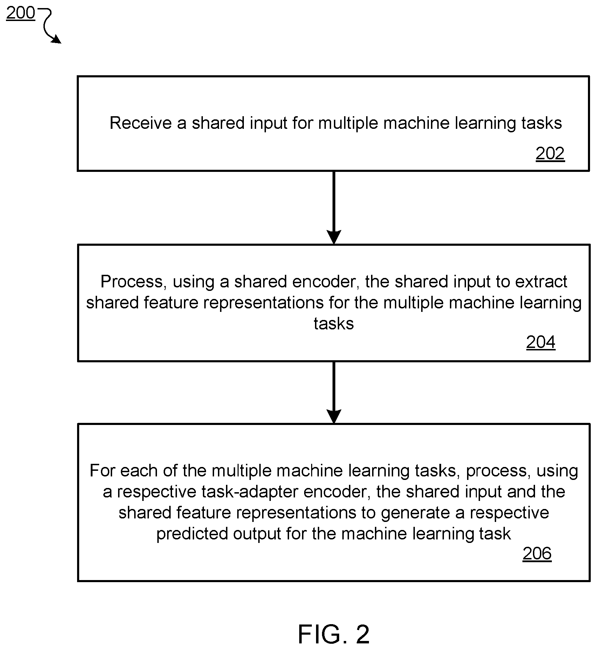

FIG. 2 is a flow diagram of an example process for generating a respective predicted output for each of multiple machine learning tasks given a shared input. For convenience, the process 200 will be described as being performed by a system of one or more computers located in one or more locations. For example, a neural network system, e.g., neural network system 100 of FIG. 1, appropriately programmed in accordance with this specification, can perform the process 200.

The system receives a shared input for multiple machine learning tasks (step 202). The shared input is a two-dimensional channel input. For example, the shared input is an audio recording that has a two-dimensional channel for time and frequency.

The system processes, using a shared encoder, the shared input to extract shared feature representations for the multiple machine learning tasks (step 204).

In particular, the each of the neural network layers following the first layer in the shared encoder receives as input an output of the previous neural network layer in the shared encoder and outputs a three-dimensional (3D) tensor which is a stack of two-dimensional channel outputs (that are stacked along a channel dimension).

The shared representations (i.e., 3D tensors) outputted by the neural network layers of the shared encoder are shared among the multiple task-adapter encoders and are used by the task-adapter encoders to compute a predicted output for each machine learning task.

For each of the multiple machine learning tasks, the system processes, using a respective task-adapter encoder, the shared input and the shared feature representations to generate a respective predicted output for the machine learning task (step 206).

In particular, each of the neural network layers of each task-adapter encoder receives as layer input a concatenation of a 3D tensor outputted by the previous layer in the task-adapter encoder and a 3D tensor outputted by the corresponding previous layer in the shared encoder 104 along the channel dimension. The layer input is a stack of 2D channel inputs. Each neural network layer of each task-adapter encoder then processes the layer input to output a 3D tensor which is a stack of 2D channel outputs along the channel dimension.

Each task-adapter encoder includes a respective output layer as the last layer. That is, each task-adapter encoder includes an appropriate kind of output layer for the corresponding machine learning task. For example, for classification tasks, the output layer is a softmax neural network layer. The output layer is configured to receive as input a concatenation of the output produced by the last layer of the shared encoder and the layer output produced by the previous layer of the task-adapter encoder, and to process the input to generate a predicted output for the respective machine learning task.

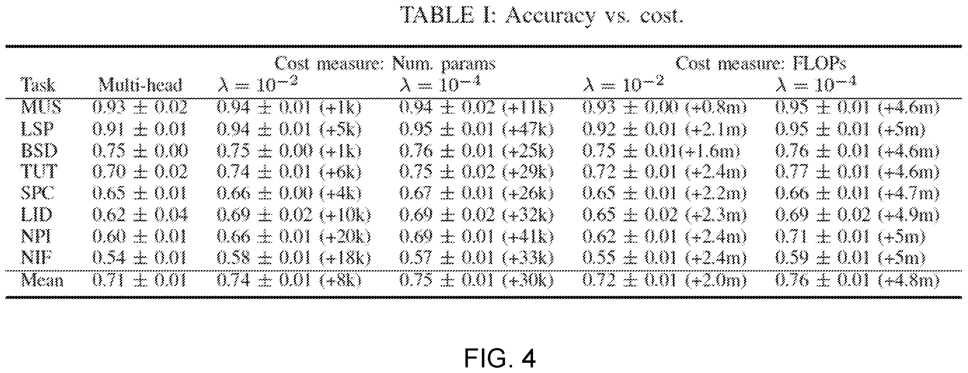

The techniques described herein can solve multiple tasks simultaneously and more accurately by sharing representations via a shared encoder and task-specific adapter encoders at different depths. This allows common representations to be augmented, which in turn leads to better performance, e.g., higher accuracy, for the multi-task adapter neural network. FIG. 4 shows experimental results where the use of the described multi-task adapter neural network results in higher accuracy compared to using a baseline architecture given the same target computational cost.

FIG. 3 is a flow diagram of an example process for training a multi-task adapter neural network. For convenience, the process 300 will be described as being performed by a system of one or more computers located in one or more locations. For example, a neural network system, e.g., neural network system 100 of FIG. 1, appropriately programmed in accordance with this specification, can perform the process 300. The multi-task adapter neural network includes a shared encoder and multiple task-adapter encoders.

The system can repeatedly perform the process 300 on different batches of training data to train the multi-task adapter neural network, i.e., to repeatedly adjust the values of parameters of the multi-task adapter neural network.

The system receives training data including a batch of shared inputs and corresponding target outputs for the shared inputs (step 302).

The system processes each shared input in the batch of shared inputs using the multi-task adapter neural network to generate, for each of multiple machine learning tasks, a respective predicted output (step 304).

The system jointly trains the shared encoder and the multiple task-adapter encoders using the training data and the predicted outputs to optimize a loss function (step 306). Generally, the loss function is a combination of cross-entropy losses for the plurality of machine learning tasks and a penalty term that represents a computational cost of computing the predicted outputs by the multiple task-adapter encoders.

In particular, the system determines, for each of the multiple machine learning tasks, a respective cross-entropy loss that measures performance of the respective task-adapter encoder on the machine learning task. Cross-entropy losses are described in R. Y. Rubinstein and D. P. Kroese, The cross-entropy method: a unified approach to combinatorial optimization, Monte-Carlo simulation and machine learning. Springer Science & Business Media, 2013.

The system determines, for each of the task-adapter encoders, a respective penalty term that captures a computational cost of computing a predicted output by the task-adapter encoder for a given set of channel selection variables. For example, the penalty term for task-adapter encoder $k$, denoted as $C_k^{adapters}$, can be computed as follows:

$$C_k^{adapters}$$
$$= \sum_{i=1}^{L} \eta_{i,k} \cdot \left\| \sigma(a_{k,i}) \right\|_1$$
$$\cdot \left( C_{0,i-1} + \left\| \sigma(a_{k-1,i}) \right\|_1 \right) \quad , \quad (5)$$

where $a_{k,i}$ trainable channel selection variables that modulate the output of each channel of the task-adapter encoders, and $\sigma(\cdot)$ is a non-linear transformation that maps its input to non-negative real numbers, i.e., $\mathbb{R} \rightarrow \mathbb{R}^+$.

For example, the non-linear transformation includes a clipped ReLU operation as defined in Equation 3:

$$\sigma(a; s) = \min\big(1, ReLU(s \cdot a + 0.5)\big)$$

$$. \tag{3}$$

The system jointly trains the shared encoder and the multiple task-adapter encoders to optimize a loss function that is a weighted sum of the cross-entropy losses and the penalty terms . For example, the system can backpropagate an estimate of a gradient determined from the loss function to jointly adjust current values of parameters of the shared encoder and the multiple task-adapter encoders. The loss function can be expressed as follows:

$$\mathcal{L} = \sum_{k=1}^{K} w_k \Big[ \mathcal{L}_k^{XE} + \lambda C_k^{adapters} \Big]$$

$$, \tag{6}$$

where $\mathcal{L}_k^{XE}$ is the cross-entropy loss for the k-th task, $w_k$ is an optional weighting term. The Lagrange multiplier $\lambda$ indirectly controls the target cost, i.e., when $\lambda = 0$, the system minimizes the cross-entropy loss $\mathcal{L}_k^{XE}$ only, thus potentially using all of the available computational capacity, both of the shared encoder and of the task-adapter channels (i.e., $C_{k,i} = C_{k,i}$). Conversely, when $\lambda$ increases, the use of additional channels is penalized, thus inducing the task-adapter encoders to use fewer channels. It is noted that in Equation 5, $\|\sigma(a_{k-1,i})\|_1$ is upper bounded by $\alpha \lfloor C_{0,i-1} \rfloor$. Therefore, when $\alpha \ll 1$, the second term ($C_{0,i-1} + \|\sigma(a_{k-1,i})\|_1$) in Equation 5 is dominated by the constant $C_{0,i-1}$, and $C_k^{adapters}$ is proportional to the 1-norm of the gating variable vector, thus promoting a sparse solution in which only a subset of the channels are used.

As the training progresses, the slope of the non-linearity s in Equation 3 is progressively increased, in such a way that, as $s \to \infty$, Equation (3) acts as a gating function. When the gating non-linearity is driven to be either 0 or 1, it is locked at this value, as the gradients are equal to zero. Therefore, after training, the slop s can be set to the value that causes the system to operate with a hard gating, i.e., it performs a hard selection of those channels that are contributing to the layer output and those that can be discarded. That is, when the output of the clipped ReLU operation is 1, the respective 2D channel output is selected to be a 2D channel input to the next neural network layer of the task-adapter encoder. When the output of the clipped ReLU operation is 0, the respective 2D channel output is not selected to be a 2D channel input to the next neural network layer of the task-adapter encoder.

FIG. 4 shows experimental results where the use of the described multi-task adapter neural network results in higher accuracy compared to using a baseline architecture, given the same target computational cost.

The experiment evaluates the described multi-task adapter neural network by computing classification accuracy of each of 8 different audio-based tasks, covering both speech and non-speech related tasks. The classification accuracy of the multi-task adapter neural network is compared to the accuracy of a baseline architecture, which is a multi-head architecture including a shared encoder and 8 different fully connected layers, one for each task. As shown in FIG. 4, the Lagrange multiplier $\lambda$ is varied to target different cost levels (e. g., $\lambda = 10^{-2}$ and $\lambda = 10^{-4}$). When using number of parameters as cost measure, the accuracy of the multi-task adapter neural network goes from 0.71 (i.e. accuracy of the baseline architecture) to 0.74 (+8k parameters) and 0.75 (+30k parameters). When using FLOPs as cost measure, the accuracy of the multi-task adapter neural network goes to 0.72 (+2.0m FLOPs) and 0.76 (+4.8m FLOPs).

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A computer-implemented method for simultaneously performing a plurality of machine learning tasks using a multi-task adapter neural network (110), wherein the multi-task adapter neural network (110) comprises a shared encoder (104) and a plurality of task-adapter encoders (106, 108, 112), wherein each of the plurality of task-adapter encoders (106, 108, 112) is associated with a respective machine learning task in the plurality of machine learning tasks, the method comprising:

   receiving a shared input (102) for the plurality of machine learning tasks, wherein the shared input (102) is an audio recording and at least one task of the plurality of machine learning tasks is to classify the content of the audio recording; and
   generating a respective predicted output for each of the plurality of machine learning tasks by processing the shared input (102) using the multi-task adapter neural network (110) comprising:

      receiving, by the shared encoder (104), the shared input (102);
      processing, by the shared encoder (104), the shared input (102) to extract shared feature representations for the plurality of machine learning tasks; and
      for each respective task-adapter encoder of the plurality of task-adapter encoders (106, 108, 112):

         receiving, by the respective task-adapter encoder, the shared input (102);
         receiving, by the respective task-adapter encoder, the shared feature representations from the shared encoder (104); and

processing, by the respective task-adapter encoder, the shared input (102) and the shared feature representations to generate the respective predicted output for the respective machine learning task;

wherein the task-adapter encoders (106, 108, 112) are arranged in parallel with the shared encoder (104).

2. The method of claim 1, wherein the plurality of machine learning tasks comprises further audio processing tasks.

3. The method of claim 1 or claim 2, wherein each of the plurality of task-adapter encoders (106, 108, 112) comprises a plurality of neural network layers, and is configured to apply a gating mechanism on channel outputs of a neural network layer of the plurality of neural network layers to select channel inputs for the next neural network layer of the plurality of neural network layers.

4. The method of any one of the preceding claims, wherein the shared encoder (104) comprises a plurality of convolutional neural network layers.

5. The method of claim 4, wherein each of the plurality of task-adapter encoders (106, 108, 112) comprises a plurality of convolutional neural network layers, and optionally, wherein the shared encoder (104) and each of the plurality of task-adapter encoders (106, 108, 112) have the same number of convolutional neural network layers.

6. The method of any one of claims 1-5, wherein the shared input (102) is a two-dimensional channel input, and optionally, wherein the audio recording has a two-dimensional channel for time and frequency.

7. The method of claim 6, wherein each of the neural network layers of the shared encoder (104) outputs a three-dimensional tensor which is a stack of two-dimensional channel outputs.

8. The method of any one of claims 5-7, wherein each of the neural network layers of each of the plurality of task-adapter encoders (106, 108, 112) outputs a three-dimensional tensor which is a stack of two-dimensional channel outputs, and optionally, wherein each of the neural network layers in the shared encoder (104) receives as input an output of the previous neural network layer in the shared encoder.

9. The method of claim 8, wherein each of the neural network layers in each of the plurality of task-adapter encoders receives as layer input a concatenation of a three-dimensional tensor of the previous layer in the task-adapter encoder and a three-dimensional tensor of the corresponding previous layer in the shared encoder (104) along the third dimension, the layer input being a stack of two-dimensional channel inputs, and optionally, wherein each two-dimensional channel output in the stack of two-dimensional channel outputs generated by each neural network layer in each of the plurality of task-adapter encoders (106, 108, 112) is associated with a respective channel selection variable.

10. The method of claim 9, wherein each of the plurality of task-adapter encoders (106, 108, 112) is configured to apply a gating mechanism on the stack of two-dimensional channel outputs of each neural network layer using the corresponding channel selection variables of the neural network layer to select relevant two-dimensional channel inputs for the next neural network layer of the task-adapter encoder.

11. The method of claim 10, wherein the gating mechanism applied to each two-dimensional channel output in the stack of two-dimensional channel outputs performs a nonlinear transformation on the two-dimensional channel output using the respective channel selection variable, and optionally, wherein the nonlinear transformation includes a clipped ReLU operation.

12. The method of claim 11, wherein when the output of the clipped ReLU operation is 1, the respective two-dimensional channel output is selected to be a two-dimensional channel input to the next neural network layer of the task-adapter encoder, and optionally, wherein when the output of the clipped ReLU operation is 0, the respective two-dimensional channel output is not selected to be a two-dimensional channel input to the next neural network layer of the task-adapter encoder.

13. The method of any one of claims 1-12, wherein the shared encoder (104) and the plurality of task-adapter encoders (106, 108, 112) are jointly trained to optimize a loss function that represents performance of the multi-task adapter neural network (110) on the plurality of machine learning tasks and computational cost to perform the plurality of machine learning tasks, and optionally, wherein the loss function is a weighted sum of cross-entropy losses for the plurality of machine learning tasks and the computational cost of computing the predicted outputs by the plurality of task-adapter encoders (106, 108, 112) for a given set of channel selection variables.

14. One or more non-transitory computer storage media storing instructions that, when executed by one or more computers, cause the one or more computers to perform the method of any one of claims 1-13.

15. A computing system comprising one or more computers configured to perform the method of any one of claims 1-13.

**Patentansprüche**

1. Computerimplementiertes Verfahren zur gleichzeitigen Durchführung einer Vielzahl von Machine-Learning-Aufgaben unter Verwendung eines neuronalen Netzwerks mit Multi-Task-Adapter (110), wobei das neuronale Netzwerk mit Multi-Task-Adapter (110) einen gemeinsam genutzten Encoder (104) und eine Vielzahl von Task-Adapter-Encodern (106, 108, 112) umfasst, wobei jeder der Vielzahl von Task-Adapter-Encodern (106, 108, 112) mit einer jeweiligen Machine-Learning-Aufgabe in der Vielzahl von Machine-Learning-Aufgaben assoziiert ist, wobei das Verfahren umfasst: Empfangen einer gemeinsam genutzten Eingabe (102) für die Vielzahl von Machine-Learning-Aufgaben, wobei die gemeinsam genutzte Eingabe (102) eine Audioaufnahme ist und mindestens eine Aufgabe der Vielzahl von Machine-Learning-Aufgaben darin besteht, den Inhalt der Audioaufnahme zu klassifizieren; und Generieren einer jeweiligen vorhergesagten Ausgabe für jede der Vielzahl von Machine-Learning-Aufgaben durch Verarbeiten der gemeinsam genutzten Eingabe (102) unter Verwendung des neuronalen Netzwerks mit Multi-Task-Adapter (110), wobei das Verarbeiten umfasst:

Empfangen, durch den gemeinsam genutzten Encoder (104), der gemeinsam genutzten Eingabe (102);
Verarbeiten, durch den gemeinsam genutzten Encoder (104), der gemeinsam genutzten Eingabe (102), um gemeinsam genutzte Merkmalsrepräsentationen für die Vielzahl von Machine-Learning-Aufgaben zu extrahieren; und
für jeden jeweiligen Task-Adapter-Encoder der Vielzahl von Task-Adapter-Encodern (106, 108, 112):

Empfangen, durch den jeweiligen Task-Adapter-Encoder, der gemeinsam genutzten Eingabe (102);
Empfangen, durch den jeweiligen Task-Adapter-Encoder, der gemeinsam genutzten Merkmalsrepräsentationen von dem gemeinsam genutzten Encoder (104); und
Verarbeiten, durch den jeweiligen Task-Adapter-Encoder, der gemeinsam genutzten Eingabe (102) und der gemeinsam genutzten Merkmalsrepräsentationen, um die jeweilige vorhergesagte Ausgabe für die jeweilige Machine-Learning-Aufgabe zu generieren;
wobei die Task-Adapter-Encoder (106, 108, 112) parallel zu dem gemeinsam genutzten Encoder (104) angeordnet sind.

2. Verfahren nach Anspruch 1, wobei die Vielzahl von Machine-Learning-Aufgaben weitere Audioverarbeitungsaufgaben umfasst.

3. Verfahren nach Anspruch 1 oder Anspruch 2, wobei jeder der Vielzahl von Task-Adapter-Encodern (106, 108, 112) eine Vielzahl von Schichten eines neuronalen Netzwerks umfasst und konfiguriert ist, um einen Gating-Mechanismus auf Kanalausgaben einer Schicht eines neuronalen Netzwerks der Vielzahl von Schichten eines neuronalen Netzwerks anzuwenden, um Kanaleingaben für die nächste Schicht eines neuronalen Netzwerks der Vielzahl von Schichten eines neuronalen Netzwerks auszuwählen.

4. Verfahren nach einem der vorhergehenden Ansprüche, wobei der gemeinsam genutzte Encoder (104) eine Vielzahl von Schichten eines neuronalen Faltungsnetzwerks umfasst.

5. Verfahren nach Anspruch 4, wobei jeder der Vielzahl von Task-Adapter-Encodern (106, 108, 112) eine Vielzahl von Schichten eines neuronalen Faltungsnetzwerks umfasst und wobei optional der gemeinsam genutzte Encoder (104) und jeder der Vielzahl von Task-Adapter-Encodern (106, 108, 112) die gleiche Anzahl von Schichten eines neuronalen Faltungsnetzwerks aufweisen.

6. Verfahren nach einem der Ansprüche 1-5, wobei die gemeinsam genutzte Eingabe (102) eine zweidimensionale Kanaleingabe ist und wobei optional die Audioaufnahme einen zweidimensionalen Kanal für Zeit und Frequenz aufweist.

**7.** Verfahren nach Anspruch 6, wobei jede der Schichten eines neuronalen Netzwerks des gemeinsam genutzten Encoders (104) einen dreidimensionalen Tensor ausgibt, der ein Stapel von zweidimensionalen Kanalausgaben ist.

**8.** Verfahren nach einem der Ansprüche 5-7, wobei jede der Schichten eines neuronalen Netzwerks von jedem der Vielzahl von Task-Adapter-Encodern (106, 108, 112) einen dreidimensionalen Tensor ausgibt, der ein Stapel von zweidimensionalen Kanalausgaben ist, und wobei optional jede der Schichten eines neuronalen Netzwerks in dem gemeinsam genutzten Encoder (104) als Eingabe eine Ausgabe der vorherigen Schicht eines neuronalen Netzwerks in dem gemeinsam genutzten Encoder empfängt.

**9.** Verfahren nach Anspruch 8, wobei jede der Schichten eines neuronalen Netzwerks in jedem der Vielzahl von Task-Adapter-Encodern als Schicht-Eingabe eine Konkatenation eines dreidimensionalen Tensors der vorherigen Schicht in dem Task-Adapter-Encoder und eines dreidimensionalen Tensors der entsprechenden vorherigen Schicht in dem gemeinsam genutzten Encoder (104) entlang der dritten Dimension empfängt, wobei die Schicht-Eingabe ein Stapel von zweidimensionalen Kanaleingaben ist, und wobei optional jede zweidimensionale Kanalausgabe in dem Stapel von zweidimensionalen Kanalausgaben, die durch jede Schicht eines neuronalen Netzwerks in jedem der Vielzahl von Task-Adapter-Encodern (106, 108, 112) generiert werden, mit einer jeweiligen Kanalauswahlvariablen assoziiert ist.

**10.** Verfahren nach Anspruch 9, wobei jeder der Vielzahl von Task-Adapter-Encodern (106, 108, 112) konfiguriert ist, um einen Gating-Mechanismus auf den Stapel von zweidimensionalen Kanalausgaben jeder Schicht eines neuronalen Netzwerks unter Verwendung der entsprechenden Kanalauswahlvariablen der Schicht eines neuronalen Netzwerks anzuwenden, um relevante zweidimensionale Kanaleingaben für die nächste Schicht eines neuronalen Netzwerks des Task-Adapter-Encoders auszuwählen.

**11.** Verfahren nach Anspruch 10, wobei der auf jede zweidimensionale Kanalausgabe in dem Stapel von zweidimensionalen Kanalausgaben angewendete Gating-Mechanismus eine nichtlineare Transformation an der zweidimensionalen Kanalausgabe unter Verwendung der jeweiligen Kanalauswahlvariablen durchführt, und wobei optional die nichtlineare Transformation eine Clipped-ReLU-Operation beinhaltet.

**12.** Verfahren nach Anspruch 11, wobei, wenn die Ausgabe der Clipped-ReLU-Operation 1 ist, die jeweilige zweidimensionale Kanalausgabe ausgewählt wird, um eine zweidimensionale Kanaleingabe für die nächste Schicht eines neuronalen Netzwerks des Task-Adapter-Encoders zu sein, und wobei optional, wenn die Ausgabe der Clipped-ReLU-Operation 0 ist, die jeweilige zweidimensionale Kanalausgabe nicht ausgewählt wird, um eine zweidimensionale Kanaleingabe für die nächste Schicht eines neuronalen Netzwerks des Task-Adapter-Encoders zu sein.

**13.** Verfahren nach einem der Ansprüche 1-12, wobei der gemeinsam genutzte Encoder (104) und die Vielzahl von Task-Adapter-Encodern (106, 108, 112) gemeinsam trainiert werden, um eine Verlustfunktion zu optimieren, die die Leistung des neuronalen Netzwerks mit Multi-Task-Adapter (110) bei der Vielzahl von Machine-Learning-Aufgaben und die Rechenkosten zur Durchführung der Vielzahl von Machine-Learning-Aufgaben repräsentiert, und wobei optional die Verlustfunktion eine gewichtete Summe von Kreuzentropieverlusten für die Vielzahl von Machine-Learning-Aufgaben und den Rechenkosten zum Berechnen der vorhergesagten Ausgaben durch die Vielzahl von Task-Adapter-Encodern (106, 108, 112) für einen gegebenen Satz von Kanalauswahlvariablen ist.

**14.** Ein oder mehrere nichtflüchtige Computerspeichermedien, die Anweisungen speichern, die, wenn sie durch einen oder mehrere Computer ausgeführt werden, den einen oder die mehreren Computer veranlassen, das Verfahren nach einem der Ansprüche 1-13 durchzuführen.

**15.** Computersystem, umfassend einen oder mehrere Computer, die konfiguriert sind, um das Verfahren nach einem der Ansprüche 1-13 durchzuführen.

**Revendications**

**1.** Procédé mis en œuvre par ordinateur pour réaliser simultanément une pluralité de tâches d'apprentissage automatique en utilisant un réseau neuronal adapteur multitâche (110), dans lequel le réseau neuronal adapteur multitâche (110) comprend un encodeur partagé (104) et une pluralité d'encodeurs adapteurs de tâche (106, 108, 112), dans lequel chacun de la pluralité d'encodeurs adapteurs de tâche (106, 108, 112) est associé à une tâche d'apprentissage automatique respective dans la pluralité de tâches d'apprentissage automatique, le procédé comprenant :

la réception d'une entrée partagée (102) pour la pluralité de tâches d'apprentissage automatique, dans lequel l'entrée partagée (102) est un enregistrement audio et au moins une tâche de la pluralité de tâches d'apprentissage automatique consiste à classifier le contenu de l'enregistrement audio ; et

la génération d'une sortie prédite respective pour chacune de la pluralité de tâches d'apprentissage automatique en traitant l'entrée partagée (102) en utilisant le réseau neuronal adapteur multitâche (110) comprenant :

la réception, par l'encodeur partagé (104), de l'entrée partagée (102) ;

le traitement, par l'encodeur partagé (104), de l'entrée partagée (102) pour extraire des représentations de caractéristiques partagées pour la pluralité de tâches d'apprentissage automatique ; et

pour chaque encodeur adapteur de tâche respectif de la pluralité d'encodeurs adapteurs de tâche (106, 108, 112) :

la réception, par l'encodeur adapteur de tâche respectif, de l'entrée partagée (102) ;

la réception, par l'encodeur adapteur de tâche respectif, des représentations de caractéristiques partagées provenant de l'encodeur partagé (104) ; et

le traitement, par l'encodeur adapteur de tâche respectif, de l'entrée partagée (102) et des représentations de caractéristiques partagées pour générer la sortie prédite respective pour la tâche d'apprentissage automatique respective ;

dans lequel les encodeurs adapteur de tâches (106, 108, 112) sont disposés en parallèle avec l'encodeur partagé (104).

2. Procédé selon la revendication 1, dans lequel la pluralité de tâches d'apprentissage automatique comprend des tâches de traitement audio supplémentaires.

3. Procédé selon la revendication 1 ou la revendication 2, dans lequel chacun de la pluralité d'encodeurs adapteurs de tâche (106, 108, 112) comprend une pluralité de couches de réseau neuronal et est configuré pour appliquer un mécanisme de porte sur les sorties de canal d'une couche de réseau neuronal de la pluralité de couches de réseau neuronal afin de sélectionner les entrées de canal pour la couche de réseau neuronal suivante de la pluralité de couches de réseau neuronal.

4. Procédé selon l'une quelconque des revendications précédentes, dans lequel l'encodeur partagé (104) comprend une pluralité de couches de réseau neuronal convolutif.

5. Procédé selon la revendication 4, dans lequel chacun de la pluralité d'encodeurs adapteurs de tâche (106, 108, 112) comprend une pluralité de couches de réseau neuronal convolutif, et éventuellement, dans lequel l'encodeur partagé (104) et chacun de la pluralité d'encodeurs adapteurs de tâches (106, 108, 112) ont le même nombre de couches de réseau neuronal convolutif.

6. Procédé selon l'une quelconque des revendications 1 à 5, dans lequel l'entrée partagée (102) est une entrée de canal bidimensionnelle, et éventuellement, dans lequel l'enregistrement audio dispose d'un canal bidimensionnel pour le temps et la fréquence.

7. Procédé selon la revendication 6, dans lequel chacune des couches du réseau neuronal de l'encodeur partagé (104) produit un tenseur tridimensionnel qui est un empilement de sorties de canaux bidimensionnelles.

8. Procédé selon l'une quelconque des revendications 5 à 7, dans lequel chacune des couches de réseau neuronal de chacun de la pluralité d'encodeurs adapteurs de tâches (106, 108, 112) produit un tenseur tridimensionnel qui est un empilement de sorties de canaux bidimensionnelles, et éventuellement, dans lequel chacune des couches de réseau neuronal de l'encodeur partagé (104) reçoit en entrée une sortie de la couche de réseau neuronal précédente de l'encodeur partagé.

9. Procédé selon la revendication 8, dans lequel chacune des couches de réseau neuronal de chacun de la pluralité d'encodeurs adapteurs de tâche reçoit comme entrée de couche une concaténation d'un tenseur tridimensionnel de la couche précédente dans l'encodeur adapteur de tâche et d'un tenseur tridimensionnel de la couche précédente correspondante dans l'encodeur partagé (104) le long de la troisième dimension, l'entrée de couche étant un empilement d'entrées de canaux bidimensionnelles, et éventuellement, dans lequel chaque sortie de canal bidimensionnelle de l'empilement de sorties de canaux bidimensionnelles généré par chaque couche de réseau neuronal de chacun de la pluralité d'encodeurs adapteur de tâches (106, 108, 112) est associée à une variable de sélection de canal respective.

10. Procédé selon la revendication 9, dans lequel chacun de la pluralité d'encodeurs adapteurs de tâche (106, 108, 112) est configuré pour appliquer un mécanisme de porte sur l'empilement de sorties de canaux bidimensionnelles de chaque couche de réseau neuronal en utilisant les variables de sélection de canal correspondantes de la couche de réseau neuronal pour sélectionner les entrées de canaux bidimensionnelles pertinentes pour la couche de réseau neuronal suivante de l'encodeur adapteur de tâche.

11. Procédé selon la revendication 10, dans lequel le mécanisme de porte appliqué à chaque sortie de canal bidimensionnelle dans l'empilement de sorties de canaux bidimensionnelles réalise une transformation non linéaire sur la sortie de canal bidimensionnelle en utilisant la variable de sélection de canal respective, et éventuellement, dans lequel la transformation non linéaire comporte une opération ReLU écrêtée.

12. Procédé selon la revendication 11, dans lequel, lorsque la sortie de l'opération ReLU écrêtée est égale à 1, la sortie de canal bidimensionnelle respective est sélectionnée comme entrée de canal bidimensionnelle de la couche de réseau neuronal suivante de l'encodeur adapteur de tâche, et éventuellement, dans lequel, lorsque la sortie de l'opération ReLU écrêtée est égale à 0, la sortie de canal bidimensionnelle respective n'est pas sélectionnée comme entrée de canal bidimensionnelle de la couche de réseau neuronal suivante de l'encodeur adapteur de tâche.

13. Procédé selon l'une quelconque des revendications 1 à 12, dans lequel l'encodeur partagé (104) et la pluralité d'encodeurs adapteurs de tâche (106, 108, 112) sont entraînés conjointement pour optimiser une fonction de perte qui représente les performances du réseau neuronal adapteur multitâche (110) sur la pluralité de tâches d'apprentissage automatique et le coût de calcul pour effectuer la pluralité de tâches d'apprentissage automatique, et éventuellement, dans lequel la fonction de perte est une somme pondérée des pertes d'entropie croisée pour la pluralité de tâches d'apprentissage automatique et du coût de calcul des sorties prédites par la pluralité d'encodeurs adapteurs de tâche (106, 108, 112) pour un ensemble donné de variables de sélection de canal.

14. Un ou plusieurs supports de stockage informatique non transitoire stockant des instructions qui, lorsqu'elles sont exécutées par un ou plusieurs ordinateurs, amènent les un ou plusieurs ordinateurs à réaliser le procédé selon l'une quelconque des revendications 1 à 13.

15. Système informatique comprenant un ou plusieurs ordinateurs configurés pour réaliser le procédé selon l'une quelconque des revendications 1 à 13.

FIG. 1

200

Receive a shared input for multiple machine learning tasks

202

Process, using a shared encoder, the shared input to extract shared feature representations for the multiple machine learning tasks

204

For each of the multiple machine learning tasks, process, using a respective task-adapter encoder, the shared input and the shared feature representations to generate a respective predicted output for the machine learning task

206

FIG. 2

300

Receive training data including a batch of shared inputs and
corresponding target outputs for the shared inputs

302

Process each shared input in the batch of shared inputs using
the multi-task adapter neural network to generate, for each of
multiple machine learning tasks, a respective predicted output

304

Jointly train the shared encoder and the multiple task-adapter
encoders to optimize a loss function

306

FIG. 3

TABLE I: Accuracy vs. cost.

| Task | Multi-head | Cost measure: Num. params | | Cost measure: FLOPs | |
| | | $\lambda = 10^{-2}$ | $\lambda = 10^{-4}$ | $\lambda = 10^{-2}$ | $\lambda = 10^{-4}$ |
|---|---|---|---|---|---|
| MUS | $0.93 \pm 0.02$ | $0.94 \pm 0.01$ (+1k) | $0.94 \pm 0.02$ (+11k) | $0.93 \pm 0.00$ (+0.8m) | $0.95 \pm 0.01$ (+4.6m) |
| LSP | $0.91 \pm 0.01$ | $0.94 \pm 0.01$ (+5k) | $0.95 \pm 0.01$ (+47k) | $0.92 \pm 0.01$ (+2.1m) | $0.95 \pm 0.01$ (+5m) |
| BSD | $0.75 \pm 0.00$ | $0.75 \pm 0.00$ (+1k) | $0.76 \pm 0.01$ (+25k) | $0.75 \pm 0.01$ (+1.6m) | $0.76 \pm 0.01$ (+4.6m) |
| TUT | $0.70 \pm 0.02$ | $0.74 \pm 0.01$ (+6k) | $0.75 \pm 0.02$ (+29k) | $0.72 \pm 0.01$ (+2.4m) | $0.77 \pm 0.01$ (+4.6m) |
| SPC | $0.65 \pm 0.01$ | $0.66 \pm 0.00$ (+4k) | $0.67 \pm 0.01$ (+26k) | $0.65 \pm 0.01$ (+2.2m) | $0.66 \pm 0.01$ (+4.7m) |
| LID | $0.62 \pm 0.04$ | $0.69 \pm 0.02$ (+10k) | $0.69 \pm 0.02$ (+32k) | $0.65 \pm 0.02$ (+2.3m) | $0.69 \pm 0.02$ (+4.9m) |
| NPI | $0.60 \pm 0.01$ | $0.66 \pm 0.01$ (+20k) | $0.69 \pm 0.01$ (+41k) | $0.62 \pm 0.01$ (+2.4m) | $0.71 \pm 0.01$ (+5m) |
| NIF | $0.54 \pm 0.01$ | $0.58 \pm 0.01$ (+18k) | $0.57 \pm 0.01$ (+33k) | $0.55 \pm 0.01$ (+2.4m) | $0.59 \pm 0.01$ (+5m) |
| Mean | $0.71 \pm 0.01$ | $0.74 \pm 0.01$ (+8k) | $0.75 \pm 0.01$ (+30k) | $0.72 \pm 0.01$ (+2.0m) | $0.76 \pm 0.01$ (+4.8m) |

FIG. 4

EP 4 018 385 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZENG, Y. et al.** Spectrogram based multi-task audio classification. *Multimedia Tools and Applications*, 26 December 2017, vol. 78, 3705-3722

- **R. Y. RUBINSTEIN** ; **D. P. KROESE**. The cross-entropy method: a unified approach to combinatorial optimization, Monte-Carlo simulation and machine learning. Springer Science & Business Media, 2013